Europäisches Patentamt

European Patent Office

Office européen des brevets

(11) Numéro de publication : **0 558 373 B1**

## FASCICULE DE BREVET EUROPEEN

(45) Date de publication du fascicule du brevet :
**11.10.95 Bulletin 95/41**

(51) Int. Cl.$^6$ : **F16L 9/133**, F16L 9/12

(21) Numéro de dépôt : **93400382.3**

(22) Date de dépôt : **16.02.93**

(54) **Tube pour transport d'essence.**

(30) Priorité : **25.02.92 FR 9202167**

(43) Date de publication de la demande :
**01.09.93 Bulletin 93/35**

(45) Mention de la délivrance du brevet :
**11.10.95 Bulletin 95/41**

(84) Etats contractants désignés :
**AT BE CH DE DK ES FR GB GR IE IT LI LU NL
PT SE**

(56) Documents cités :
**DE-C- 4 001 125
DE-C- 4 006 870
FR-A- 2 579 290
FR-A- 2 592 655
Week 9226, Derwent Publications Ltd., London, GB; AN 92-212567 & JP-A-4 140 585 (TOKAI RUBBER IND LTD) 14 Mai 1992**

(73) Titulaire : **ELF ATOCHEM S.A.
4 & 8, Cours Michelet
La Défense 10
F-92800 Puteaux (FR)**

(72) Inventeur : **Nawrot, Serge
rue Marceau Boulay
F-27470 Serquigny (FR)**
Inventeur : **Lorek, Serge
36 rue des Lombards
F-27000 Evreux (FR)**
Inventeur : **Strassel, Albert
30 rue Pasteur
F-69600 Oullins (FR)**

## Description

La présente invention concerne un tube pour l'alimentation en essence des moteurs , en particulier les automobiles. Le tube objet de l'invention est un tube de polyamide gainé intérieurement d'un film de polyfluorure de vinylidène.

Pour des raisons de sécurité et de préservation de l'environnement, les constructeurs automobiles imposent aux tubes d'essence des caractéristiques mécaniques : résistance et flexibilité, et des caractéristiques de résistance accrue à la perméabilité. Les tubes doivent être le moins perméable possible aux produits pétroliers et à leurs additifs, en particulier le méthanol.

Actuellement les tubes de polyamide sont couramment utilisés dans l'industrie automobile. Les polyamides représentent un matériau idéal pour cette application de tube, leur résistance mécanique étant excellente et leur flexibiité étant suffisante pour qu'un tube supporte, sans casser, durant pratiquement toute la vie d'un véhicule, l'accumulation de mouvements de flexion. Ces tubes en polyamides ne répondent plus aux nouvelles exigences des constructeurs automobiles en ce qui concerne la perméabilité. Avec la présence, de plus en plus développée, de méthanol dans l'essence, la sensibilité des tubes en polyamide se manifeste par un gonflement du tube entraînant une diminution des propriétés mécaniques et des modifications dimensionnelles. Une solution à ce problème (FR-A-2 579 290) consiste à revêtir intérieurement un tube en polyamide d'une couche formant barrière contre l'alcool. Cette couche doit toutefois être elle-même protégée par une couche d'arrêt d'eau, ce qui complique la structure du tuyau.

Pour remédier à cet inconvénient, tout en conservant les effets mécaniques des polyamides, l'objet de l'invention consiste à gainer la paroi interne du tube de polyamide d'une couche de polyfluorure de vinylidène. La couche de polyfluorure de vinylidène est de préférence la plus fine possible afin de conserver au maximum la flexibilité du polyamide, sachant que le polyfluorure de vinylidène n'est pas connu particulièrement pour ses propriétés de souplesse.

De façon recommandée, les tubes pour l'alimentation en essence des moteurs, possédant généralement un diamètre externe de 6 à 12 mm, l'épaisseur de la couche interne de polyfluorure de vinylidène est comprise entre 10 μm et 1 mm et celle du polyamide comprise entre 0,8 et 1,8 mm, une couche intermédiaire de liant d'adhésion entre le polyamide et le polyfluorure de vinylidène de 10 μm à 1 mm complétant le tube.

Il est en effet indispensable que le polyfluorure de vinylidène soit lié de façon efficace au polyamide. Un tube qui ne présente pas de liaison entre le polyfluorure de vinylidène et le polyamide ne peut posséder une bonne flexibilité et par conséquent ne peut être plié ou coudé facilement par formage à chaud ; dans ce cas le matériau le plus mince forme des plis au cours de l'opération.

Par ailleurs si les deux couches n'adhèrent pas entre elles, la condensation éventuelle des gaz entre les deux couches peut dans le temps entraîner la déformation de la partie du tube la plus mince. En outre les tubes étant reliés entre eux, ainsi qu'au réservoir d'essence et au carburateur par des raccords, ceux-ci ne peuvent assurer l'étanchéité s'ils s'appuient sur deux couches dissociées. Enfin dans le cas où l'épaisseur de la couche de polyfluorure de vinylidène, à l'intérieur du tube, est très mince, par exemple de 10 à quelques dizaines de μm, et sans adhésion, une dépression dans le tube déforme de façon irréversible le film de polyfluorure de vinylidène rendant le tube inutilisable.

Il est constaté qu'un tel tube constitué d'une couche interne de polyfluorure de vinylidène liée par un liant d'adhésion à une couche externe de polyamide permet de diminuer d'un facteur 10 la perméabilité par rapport à celle d'un tube équivalent en polyamide, tout en conservant les autres propriétés, telles que la résistance au choc à froid, dans les limites des cahiers des charges des constructeurs automobiles.

En vue d'assurer l'adhésion entre le polyamide et le polyfluorure de vinylidène on utilise de façon connue un polymère possédant des groupements carbonyles sur sa chaîne polymérique tels qu'un polyuréthanne, un polyamide, un polyurée, un polyester, un copolymère possédant des groupements éthylénique-oxyde de carbone, ou encore leurs dérivés copolymériques ou leurs mélanges.

A ce liant d'adhésion peut être mélangé du polyfluorure de vinylidène dans la proportion de 1 à 50 % en poids.

A ce liant d'adhésion peuvent également être incorporés d'autres polymères ou copolymères thermoplastiques, à condition que le liant d'adhésion se trouve présent pour au moins 50 % en poids dans le mélange.

Le polyamide utilisé est habituellement un polyamide 11 ou 12 plastifié ou non, ou encore un polyamide 6 ou 6.6. Le polyamide peut éventuellement être un produit modifié pour résister aux chocs ou un copolymère.

Le terme polyfluorure de vinylidène est à comprendre comme désignant un homopolymère ou un copolymère possédant au moins 70 % en poids de restes de fluorure de vinylidène, ou encore un polyfluorure de vinylidène mélangé à un autre polymère thermoplastique à condition qu'au moins 50 % en poids de polyfluorure de vinylidène soient présents dans le mélange.

L'invention concerne aussi des tubes identiques aux précédents sauf leur diamètre plus important. Ils

2

conviennent pour relier le stockeur d'essence enterré et la pompe de la station service.

Le tube selon l'invention est obtenu de façon connue par coextrusion des trois composants dans les conditions d'extrusion connues propres à chacun des matériaux thermoplastiques.

L'exemple suivant illustre l'invention sans la limiter.

## EXEMPLE

Un tube A de 8 mm de diamètre externe obtenu de façon classique dans une installation de coextrusion trimatiére est constitué de :

- une couche de polyamide 12 (Rilsan [R] AESN Noir P40 TL) de 600 µm d'épaisseur
- une couche de 150 µm d'épaisseur d'un mélange de :
  65 parties en poids de polyuréthane (Estane [R] 58271)
  35 parties en poids d'un copolymère éthylène acétate de vinyle (OREVAC [R] 9307)
- une couche de polyfluorure de vinylidène (Foraflon [R] 4000 HD) de 250 µm d'épaisseur

A titre comparatif un tube B de 8 mm de diamètre obtenu par simple extrusion de polyamide 12 (Rilsan [R] AESN Noir P40 TL) de 1 mm d'épaisseur est testé en parallèle à la tenue à la perméabilité à l'essence super avec plomb contenant 15 % de méthanol.

Les résultats suivants sont obtenus :

|  | Tube A | Tube B |
|---|---|---|
| Perméabilité en g/m$^2$/jour à 23°C | 1,3 | 52 |
| Résistance au choc à −40°C norme DIN 73378 | Pas de cassure | Pas de cassure |

## Revendications

1. Tube, à base de polyamide, pour l'alimentation en essence des moteurs, constitué d'une couche extérieure en polyamide et d'une couche intérieure en polyfluorure de vinylidène liées entre elles par un liant d'adhésion.

2. Tube selon la revendication 1 caractérisé en ce que le liant d'adhésion est un polymère ou un copolymère possédant des groupements carbonyles sur sa chaine polymérique.

3. Tube selon l'une des revendications 1 ou 2 caractérisé en ce que l'épaisseur de la couche de polyamide est comprise entre 0,8 et 1,8 mm, celle de la couche de polyfluorure de vinylidène entre 10 µm et 1 mm et celle du liant d'adhésion entre 10 µm et 1 mm.

4. Tube selon l'une des revendications 1 à 3 caractérisé en ce qu'il est obtenu par extrusion.

## Patentansprüche

1. Schlauch auf Basis von Polyamid zur Kraftstoffversorgung von Motoren, bestehend aus einer äußeren Polyamidschicht und einer inneren Vinylidenpolyfluoridschicht, die miteinander durch ein haftkraftverleihendes Bindemittel verbunden sind.

2. Schlauch nach Anspruch 1, dadurch gekennzeichnet, daß das haftkraftverleihende Bindemittel ein Polymer oder Copolymer mit Carbonylgruppen in seiner Polymerkette ist.

3. Schlauch nach Anspruch 1 oder 2, dadurch gekennzeichnet, daß die Dicke der Polyamidschicht zwischen 0,8 und 1,8 mm, die der Vinylidenpolyfluoridschicht zwischen 10 μm und 1 mm und diejenige des haftkraftverleihenden Bindemittels zwischen 10 μm und 1 mm liegt.

4. Schlauch nach einem der Ansprüche 1 bis 3, dadurch gekennzeichnet, daß er durch Extrusion erhalten wird.

## Claims

1. Polyamide-based tube for the petrol supply of engines, consisting of an outer polyamide layer and of an inner poly(vinylidene fluoride) layer bonded together by an adhesion binder.

2. Tube according to Claim 1, characterized in that the adhesion binder is a polymer or a copolymer having carbonyl groups on its polymeric chain.

3. Tube according to either of Claims 1 and 2, characterized in that the thickness of the polyamide layer lies between 0.8 and 1.8 mm, that of the poly(vinylidene fluoride) layer lies between 10 μm and 1 mm and that of the adhesion binder lies between 10 μm and 1 mm.

4. Tube according to one of Claims 1 to 3, characterized in that it is obtained by extrusion.